# EUROPEAN PATENT APPLICATION

(11) **EP 4 796 906 A1**
(43) Date of publication of application: **26.08.2026**
(21) Application number: 25159883.5
(22) Date of filing: 25.02.2025
(51) Int. Cl.: G01J 3/42

(54) **DEVICE FOR EMISSION OF THERMAL RADIATION, SYSTEM AND METHOD OF OPERATING**

(71) Applicant: Axetris AG, 6056 Kägiswil (CH)
(72) Inventor: INTLEKOFER, Alexander, 6012 Obernau (CH); ULRICH, Roger, 6056 Kägiswil (CH); LOSIO. Paolo, 6056 Kägiswil (CH)
(74) Representative: Witte, Weller & Partner Patentanwälte mbB

(57) **Abstract**

A device (12) for emission of thermal radiation, the device (12) comprising a substrate (24), a membrane (26), wherein the substrate (24) provides a frame for the membrane (26), a resistive structure (28) on the membrane (26), and an emitter (32) of the thermal radiation arranged above the structure (28), wherein the emitter (32) comprises at least two emitter elements (36) which comprise a central emitter element (40) surrounded by one or more peripheral emitter elements (42), and wherein the device (12) is adapted to emit broad spectrum thermal radiation. Further, a system (10) and a method (90) for optical gas analysis are disclosed.

## Description

The present invention relates to a device for emission of thermal radiation and method of operating such device. Such a device may also be referred to as a thermal emitter or as an infrared source.

Thermal emitters are a key component in gas analysis, utilizing Micro-Electro-Mechanical Systems (MEMS) technology to efficiently emit thermal radiation similar to that of a black body. A black body is an idealized physical body that absorbs all incident electromagnetic radiation, making it an excellent reference for thermal emission. MEMS-based thermal emitters typically consist of microscale structures that can be heated to elevated temperatures, causing them to emit infrared radiation. These devices are precisely designed to achieve desired spectral characteristics, enabling accurate and selective gas analysis based on the unique absorption and emission spectra of different gases.

A key advantage of MEMS-based thermal emitters is their compact size, quick electrical modulation and low power consumption. The integration of MEMS technology allows the creation of miniaturized and energy efficient thermal emitters, making them well suited for portable and field deployable gas analysis systems. Precise control of the emission spectra also enhances the selectivity and sensitivity of these devices, allowing specific gases to be detected and analyzed with high accuracy.

Thermal emitters have a wide range of applications in gas analysis across a variety of industries. One notable application is in environmental monitoring, where they are used to detect and quantify airborne pollutants. In addition, thermal transmitters are valuable in industrial processes such as combustion control and emission monitoring. They play a vital role in ensuring the efficiency and compliance of manufacturing processes by providing real-time data on gas composition. In medical applications, thermal emitters are used for breath analysis, monitoring of anesthesia gases and monitoring of patient respiration during surgery or intensive care, enabling non-invasive diagnostics through the detection of specific biomarkers. The versatility, compactness and precision of MEMS-based thermal emitters make them indispensable in advancing gas analysis technologies for a wide range of applications.

In addition, the scalability and versatility of MEMS-based thermal emitters contribute to their widespread adoption in various gas sensing platforms. These emitters can be integrated into sensor arrays, enabling the simultaneous detection of multiple gases in complex environments. For example, in healthcare, MEMS-based thermal emitters have applications beyond breath analysis. They are used in medical devices to detect trace gases associated with metabolic processes and diseases.

As technology continues to advance, MEMS-based thermal emitters will play a key role in the development of next-generation gas sensing technologies. Continued refinement of the manufacturing processes and materials used in MEMS devices is expected to further improve the performance and reliability of thermal emitters. This in turn will contribute to the further development of gas analysis techniques, with implications for environmental monitoring, industrial processes, healthcare diagnostics and beyond. The intersection of MEMS technology and thermal emitters represents a promising frontier in the quest for more efficient, portable and accurate gas sensing solutions.

The thermal emitters or infrared (IR) sources described here are micromachined, electrically modulated thermal infrared emitters featuring true black body radiation characteristics, quick electrical modulation, low power consumption, high emissivity, and a long lifetime. The appropriate design is based on a resistive heating element deposited onto a thin dielectric membrane which is suspended on a micromachined silicon structure.

It is an object of the present invention to provide an improved device for emission of thermal radiation, an improved system for emission of thermal radiation and an improved method of operating a device for emission of thermal radiation.

According to a first aspect, there is provided a device for emission of thermal radiation, the device comprising
- a substrate,
- a membrane, wherein the substrate provides a frame for the membrane,
- a resistive structure on the membrane, and
- an emitter of the thermal radiation arranged above the structure,

wherein the emitter comprises at least two emitter elements,
wherein the device is adapted to emit broad spectrum thermal radiation, and
wherein the emitter elements comprises a central emitter element surrounded by one or more peripheral emitter elements.

This means that the emitter has partitions along the direction outward from the center, while the central emitter element itself is not partitioned. This is believed to be beneficial regarding mechanical properties and mechanical optimization. If the emitter has a circular shape, a radial direction is understood to be this outward direction.

Typically, the emitter is one fully connected layer, i.e., a monolithic structure, to maximize the radiating surface. However, the inventors identified the problem that when the device is cycled through over 500°C of temperature change quickly, high amounts of thin film stress can accumulate. This can lead to deformation and a subsequent delamination of the emitter layer.

Therefore, the inventors have identified a solution to this problem by partitioning the relatively thick emitting layer into at least two emitter elements. Each emitter element is smaller than the emitter, and the entirety of all emitter elements forms the emitter. The technical effect is that an emitter is provided where different areas can expand and contract according to their individual local temperature without causing the device to fail. Also, if the emitter and the resistive structure are in electrical contact (and both conductive), segmenting the emitter would reduce the electrical interactions between the two elements, e.g., a current flow. Preferably, an upper surface of the resistive structure is arranged at least substantially within a plane, e.g., the XY-plane. Segmenting or partitioning generally allows to reduce the influence of the emitter layer on the mechanical and electrical properties of the system. As both layers, i.e. the emitter layer and the layer of the resistive structure, are connected there will always be some interaction, but by introducing spacing, especially only in the emitter material, makes its properties less dominant.

In preferred embodiments, the emitter arranged at a center of the membrane. The device is configured such that the thermal radiation provided by the device has a spectrum that is similar to the spectrum of Planck black body radiation. The device has various fields of use, including medical gas sensing, safety applications in the sense of toxic gas detection, explosive gas leak detection, refrigerant gas detection (either toxic or pollutant), etc.. The device can provide for a spectrally approximately constant emissivity above 0.80 or above 0.85 in a wide wavelength range which is at least 2 µm to 15 µm for preferred embodiments.

In preferred embodiments, the size of the emitter is smaller than a size of the membrane. In addition, the size of the emitter may be at least 60% of a size of the membrane. In this context it is noted that the term "size" as used in this application is not directed at a volume. Rather, it refers to a two-dimensional extent perpendicular to the main direction of emission from the emitter, in particular an area.

In preferred embodiments, the at least two emitter elements have substantially the same surface area for each of these elements. In this context the term substantially indicates a maximum deviation of +/- 20%, preferably +/- 10% and in particular +/- 5%.

It is important to note that the feature of the emitter elements comprising a central emitter element surrounded by one or more peripheral emitter elements is optional. It can be omitted in case it is not intended to achieve said beneficial technical effect. Elements of the invention can be practiced without this feature.

According to an improvement the device is adapted to emit infrared broadband spectral emission between 1 µm and 15 µm, in particular between 2 µm and 12 µm, in particular between 2 µm and 7 µm.

This is a preferred spectrum of thermal radiation corresponding to a wavelength range so that at least approximately 90% or at least approximately 95% of the total emitted optical power is considered.

According to a further improvement the emitter comprises at least four, in particular at least five, in particular at least six, in particular at least seven elements.

As has been stated above, the prior art suggests that the emitter is a monolithic structure so that the radiating surface is maximized. This general principle could also be transferred to the present device, i.e., there should be as few emitter elements as possible to maximize the radiating surface. However, contrary to this assumption, the inventors found that some divisions into a plurality of emitter elements can be beneficial in view of the identified advantage, i.e., different areas can expand and contract according to their individual local temperature without causing the device to fail. Also, it is believed that the growth of emitter layers may be improved, especially when manufactured by electrochemical processes.

According to a further improvement the emitter has a circular shape.

Such a circular shape allows for a uniform temperature distribution in all directions of the emitter.

According to a further improvement a circular symmetric pattern of emitter elements is provided.

A homogenous growth may be advantageously achieved or improved by a circular symmetric pattern.

According to a further improvement the emitter has a square or octagon shape.

It is noted that, in general, an emitter with a circular shape can best accommodate for the isolines of the temperature field, where temperature isolines on the circular membrane will be circular due to symmetry. A geometry following these isolines is expected to reduce stress. Especially, corners in a membrane often experience a stress peak. A square membrane is simple to manufacture using KOH etching (wet etching). On a square membrane the isolines will be round in the center and become squircles (squares with rounded edges) toward the outside. The inventors found that partitioning along isolines is a good guidance, where it is acceptable that the resulting shapes would deviate from the idealized shapes in the pictures. Further, the inventors found that an octagon is an approximation of a circle within a square membrane, and an octagon uses more surface area than a circle if placed within the same square membrane, thus this shape is a previously unidentified compromise between symmetry, homogeneous temperature distribution and filling of the membrane with emitter material to improve output. This is especially true if the octagon is irregular, e.g. a square with cut corners.

According to a further improvement the emitter elements are arranged in a spoke wheel configuration.

This arrangement can be beneficial for certain applications and depending on the characteristics that are being focused on, especially when optimizing mechanical properties.

According to a further improvement a ratio of an area of a central element over an area of a peripheral element is between 50% and 150%, in particular between 75% and 125%.

The ratio between the areas of the center parts and one of the outer parts could play an important role in the homogeneity of the black-platinum growth over the chip. Additionally, the thermal stress is dependent on the characteristic size of the different partitions through the emitter layer (Δ*L = α ΔT L*). To further minimize thin film stress, the whole membrane should be able to slightly deform in temperature. It is noted that mechanical deformation, e.g. bending, is much larger than the membrane thickness. As an example, in a practical test, approx. 20µm deformation in a membrane of 0.5µm thickness was observed at approx. 500°C peak temperature.

According to a further improvement a separation gap separating two emitter elements has a same shape as a periphery of the emitter.

This improvement can help to decouple the properties of the emitter and the resistive element, i.e. the heater.

According to a further improvement a separation gap between a first emitter element and a second emitter element has a width between 1 µm and 80 µm, in particular between 2 µm and 60 µm, in particular between 3 µm and 40 µm, in particular between 5 µm and 30 µm.

These values have been determined as beneficial to strike a technically advantageous compromise between the separations being as narrow as possible for high fill factor and high efficiency, yet still being as broad as necessary to provide electrical insulation/prevent current flow and reduce stress.

According to a further improvement the emitter is segmented both in a radial direction and in a circular direction.

To further minimize thin film stress, the whole membrane should be able to slightly deform in temperature, see above. Therefore, an emitter with partitions along a first direction outward from the center and a second direction perpendicular to the first direction is suggested. If the emitter has a circular shape, the first direction may be understood as a radial direction, and the second direction may be understood as a circumferential or tangential direction.

For preferred embodiments, the emitter is segmented in e.g. at least two, in particular at least 3 emitter elements the first directions, in particular the radial direction, and in e.g. at least two, in particular at least 3, in particular at least 4, in particular at least 5, in particular at least 6, in particular at least 8, elements in the second direction, in particular the tangential direction.

According to a further improvement a size of the emitter is at least 70%, in particular at least 80%, in particular at least 85%, in particular at least 90% of a size of the membrane.

These values have been found to be beneficial with regard to efficiency.

According to a further improvement, the emitter comprises or consists of a metal black, in particular black-platinum.

Metal black and especially black-platinum exhibits advantageous characteristics for the intended use, meaning the intended emission of thermal radiation. In some preferred embodiments, the emitter consists of metal black, in particular black-platinum.

According to a second aspect, there is provided a system for optical gas analysis, the system comprising:
- a device as described above, the device adapted to emit a first light through a gas to be analyzed;
- at least one light sensor; and
- an analyzer, wherein the analyzer is adapted to determine at least one gas concentration of at least one component of the gas based on a second light detected by the at least one light sensor, wherein the passing through the gas changes the first light into the second light.

According to a third aspect, there is provided a method for optical gas analysis, the method comprising the steps of :
- emitting, using a device as described above, thermal radiation as first light through a gas to be analyzed;
- detecting second light, wherein a passing through the gas changes the first light into the second light; and
- determining at least one gas concentration of at least one component of the gas based on the detected second light.

It is understood that the features mentioned above and those to be explained below can be used not only in the combination indicated in each case, but also in other combinations or on their own, without departing from the scope of the present invention.

Embodiments of the invention are shown in the drawings and are explained in more detail in the following description. In the drawings:
Fig. 1 shows an embodiment of a system for optical gas analysis.
Fig. 2 shows a cross-section of the general structure of device for emission of thermal radiation.
Fig. 3 shows a first, second and third embodiment of a device for emission of thermal radiation.
Fig. 4 shows a fourth, fifth and sixth embodiment of a device for emission of thermal radiation.
Fig. 5 shows a seventh, eighth and ninth embodiment of a device for emission of thermal radiation.
Fig. 6 shows a tenth, eleventh and twelfth embodiment of a device for emission of thermal radiation.
Fig. 7 shows a thirteenth, fourteenth and fifteenth embodiment of a device for emission of thermal radiation.
Fig. 8 shows a sixteenth, seventeenth and eighteenth embodiment of a device for emission of thermal radiation.
Fig. 9 shows an embodiment of method for optical gas analysis.

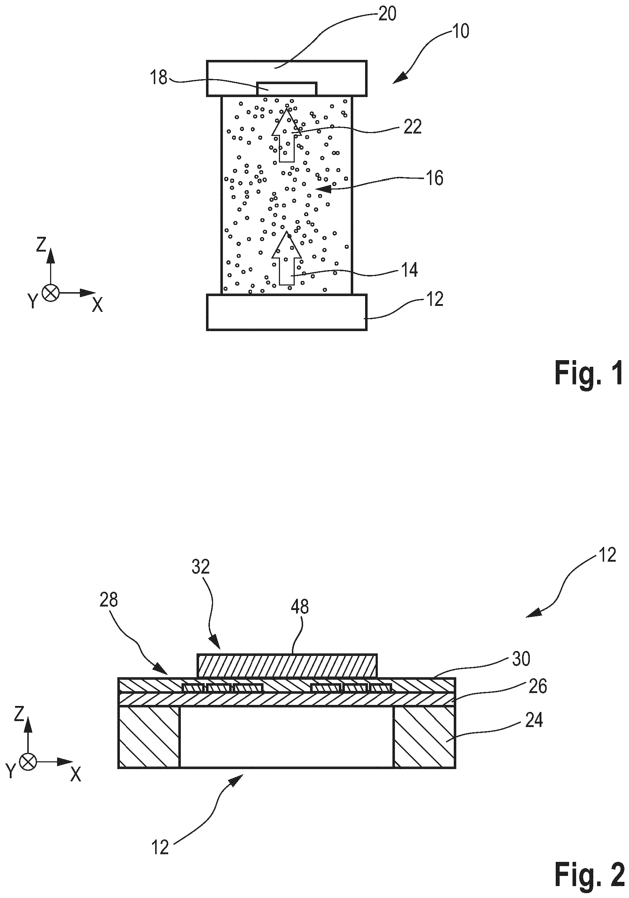

Fig. 1 shows an embodiment of a system 10 for optical gas analysis. The system 10 comprises a device 12 for emission of thermal radiation in the form of a first light 14, here a light in the infrared range. The device 12 emits the first light 14 through a gas 16, symbolized as small dots, to be analyzed.

The system 10 further comprises at least one light sensor 18 and an analyzer 20. The analyzer 20 determines at least one gas concentration of at least one component of the gas 16 based on a second light 22 detected by the at least one light sensor 18.

The relationship of the first light 14 and the second light 22 is that the first light 14 changes into the second light 22 when passing through the gas. This change occurs because certain wavelengths contained in the first light are attenuated by the gas, thus resulting in the second light. As different gases attenuate the first light in different ways, the second light gives an indication regarding the type of gas and its concentration.

Fig. 2 shows a cross-section of the general arrangement of a device 12 for emission of thermal radiation, especially infrared light. The device 12 comprises a substrate 24 and a membrane 26, wherein the substrate 24 provides a frame for the membrane 26. It can be seen that the substrate 24 has a cavity which exposes an area of an underside of the membrane 26. The cavity in the substrate 24 is typically created by etching, so that the substrate 24 obtains a frame-like shape.

A resistive structure 28 is arranged on the membrane 26. The resistive structure 28 is embedded in an optional passivation layer 30. The structure 28 is arranged at least substantially within a plane. In this representation, the plane is perpendicular to the drawing layer, i.e. it extends towards the viewer of the drawing. In the given orientation the plane is the XY-plane.

An emitter 32 of the thermal radiation is arranged over the structure 28. The emitter 32 is usually covered by a passivation layer (not shown). The resistive structure 28 is heated by running a current through the structure 28. The heat from the structure 28 is received by the emitter 32 and is then emitted as infrared light or is transmitted as heat to the surrounding air or gas, and other structures. The emitter 32 is configured to provide desired emission characteristics. The emitter 32 has an upper surface 48.

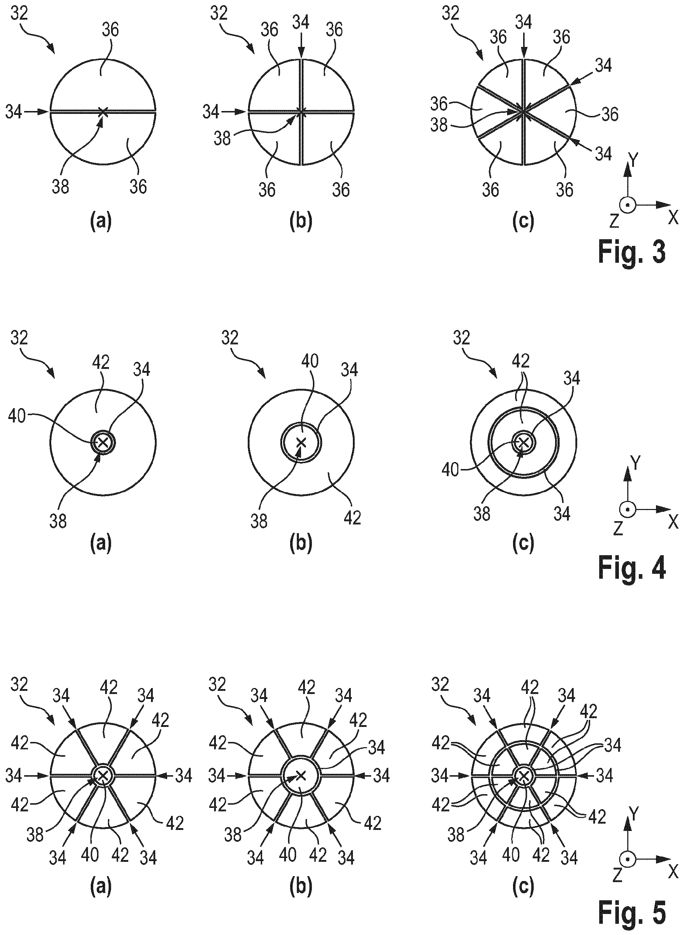

Fig. 3 (a) shows a first embodiment of an emitter 32 of a device 12 for emission of thermal radiation. The emitter 32 has a circular shape and is divided by a separation gap 34 into two emitter elements 36, wherein each emitter element 36 has a shape like a half circle. The separation gap 34 goes through a center 38 of the emitter 32.

Fig. 3 (b) shows a second embodiment of an emitter 32 of a device 12 for emission of thermal radiation. The emitter 32 has a circular shape and is divided by two separation gaps 34 into four emitter elements 36, wherein each emitter element 36 has a shape like a quarter circle. The separation gaps 34 go through the center 38 of the emitter 32.

Fig. 3 (c) shows a third embodiment of an emitter 32 of a device 12 for emission of thermal radiation. The emitter 32 has a circular shape and is divided by three separation gaps 34 into six emitter elements 36, wherein each emitter element 36 has a shape like a circular sector of 60°. The separation gaps 34 go through the center 38 of the emitter 32. This arrangement is considered to be a spoke wheel configuration.

Fig. 4 (a) shows a fourth embodiment of an emitter 32 of a device 12 for emission of thermal radiation. The emitter 32 has a circular shape and is divided by one separation gap 34 into two emitter elements 36, in particular a center emitter element 40 that has a shape like a circle and a peripheral emitter element 42 that has a shape like an annulus. Both emitter elements 36 have the same center that corresponds to the center 38 of the emitter 32. The separation gap 34 is a circle around the center 38 of the emitter 32. It is preferred that the size of the center emitter element 40 is at least 2% of the total size of the emitter 32, preferably at least 3%, more preferably at least 5% and in particular more than 10%.

Fig. 4 (b) shows a fifth embodiment of an emitter 32 of a device 12 for emission of thermal radiation. The fifth embodiment differs from the fourth embodiment in that while the emitters 32 have the same size, the center emitter element 40 of the fifth embodiment has a larger radius thereby reducing the thickness of the annulus, i.e., the difference between the outer radius of the annulus and the inner radius of the annulus.

Fig. 4 (c) shows a sixth embodiment of an emitter 32 of a device 12 for emission of thermal radiation. The emitter 32 has a circular shape and is divided by two separation gaps 34 into three emitter elements 36, in particular a center emitter element 40 that has a shape like a circle and two peripheral emitter elements 42 that each have a shape like an annulus. All three emitter elements 36 have the same center that corresponds to the center 38 of the emitter 32. The separation gaps 34 are circles with different radii around the center 38 of the emitter 32.

Fig. 5 (a) shows a seventh embodiment of an emitter 32 of a device 12 for emission of thermal radiation. The emitter 32 has a circular shape and is divided by seven separation gaps 34 into seven emitter elements 36, in particular a center emitter element 40 that has a shape like a circle and six peripheral emitter elements 42 that each have a shape like an annulus sector of 60°. From the general orientation, the separation gaps 34 are directed towards the center 38 of the emitter 32, leaving out the area of the center emitter element 38.

Fig. 5 (b) shows an eighth embodiment of an emitter 32 of a device 12 for emission of thermal radiation. The eighth embodiment differs from the seventh embodiment in that while the emitters 32 have the same size, the center emitter element 40 of the eighth embodiment has a larger radius thereby reducing the size of the peripheral emitter elements 42.

Fig. 5 (c) shows a ninth embodiment of an emitter 32 of a device 12 for emission of thermal radiation. The ninth embodiment differs from the seventh embodiment in that the six peripheral emitter elements 40 are further divided by an additional circular separation gap 34 that has a center that shares the center 38 of the emitter 32. Therefore, the ninth embodiment comprises a total of one center emitter element 40 and twelve peripheral emitter elements 42. All arrangements of Fig. 5 (a) - (c) are considered to be spoke wheel configurations.

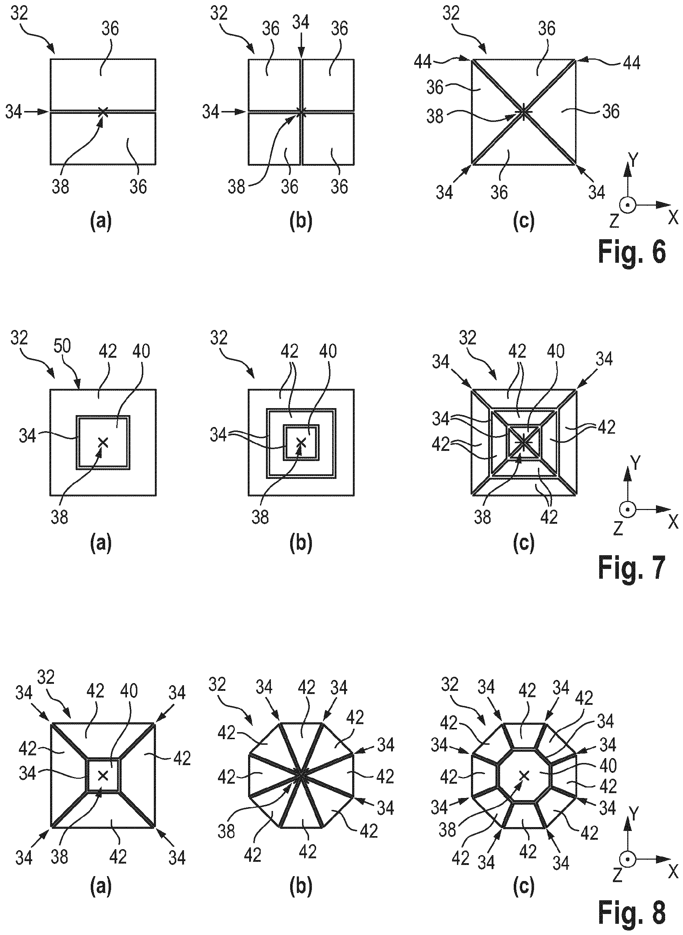

Fig. 6 (a) shows a tenth embodiment of an emitter 32 of a device 12 for emission of thermal radiation. The emitter 32 has a square shape and is divided by a separation gap 34 into two emitter elements 36, wherein each emitter element 36 has a rectangular shape like a half square. The separation gap 34 goes through the center 38 of the emitter 32 and extends perpendicular to corresponding sides of the emitter 32.

Fig. 6 (b) shows an eleventh embodiment of an emitter 32 of a device 12 for emission of thermal radiation. The emitter 32 has a square shape and is divided by two separation gaps 34 into four emitter elements 36, wherein each emitter element 36 has a shape like a square. The separation gaps 34 go through the center 38 of the emitter 32, extend perpendicular to corresponding sides of the emitter 32, and are perpendicular to each other.

Fig. 6 (c) shows a twelfth embodiment of an emitter 32 of a device 12 for emission of thermal radiation. The emitter 32 has a square shape and is divided by two separation gaps 34 into four emitter elements 36, wherein each emitter element 36 has a shape like a triangle. The separation gaps 34 go through the corners 44 of the emitter 32 and are perpendicular to each other.

Fig. 7 (a) shows a thirteenth embodiment of an emitter 32 of a device 12 for emission of thermal radiation. The emitter 32 has a square shape and is divided by a separation gap 34 into two emitter elements 36, in particular a center emitter element 40 that has a shape like a square and a peripheral emitter element 42 that has a shape like a hollow square. The separation gap 34 has a shape like a square. The centers of the emitter elements 36 and the separation gap 34 correspond to the center 38 of the emitter 32. This embodiment is one of the examples shown, where the separation gap separating the two emitter elements 36 has the same shape as a periphery 50 of the emitter 32.

Fig. 7 (b) shows a fourteenth embodiment of an emitter 32 of a device 12 for emission of thermal radiation. The emitter 32 has a square shape and is divided by two separation gaps 34 into three emitter elements 36, in particular a center emitter element 40 that has a shape like a square and two peripheral emitter elements 42 that each have a shape like a hollow square. All three emitter elements 36 have the same center that corresponds to the center 38 of the emitter 32. The separation gaps 34 are squares with different edge lengths around the center 38 of the emitter 32.

Fig. 7 (c) shows a fifteenth embodiment of an emitter 32 of a device 12 for emission of thermal radiation. The fifteenth embodiment differs from the fourteenth embodiment in that it has two additional separation gaps 34 that go through the corners 44 of the emitter 32 and are perpendicular to each other. Therefore, the fifteenth embodiment comprises a total of twelve emitter elements 36.

Fig. 8 (a) shows a sixteenth embodiment of an emitter 32 of a device 12 for emission of thermal radiation. The emitter 32 has a square shape and is divided by five separation gaps 34 into five emitter elements 36, in particular a center emitter element 40 that has a shape like a square and four peripheral emitter elements 42 that each have a shape like a trapezoid. From the general orientation, four separation gaps 34 are directed towards the center 38 of the emitter 32 leaving out the area of the center emitter element 38.

Fig. 8 (b) shows a seventeenth embodiment of an emitter 32 of a device 12 for emission of thermal radiation. The emitter 32 has an octagon shape and is divided by four separation gaps 34 into eight emitter elements 36. The separation gaps 34 go through the center 38 of the emitter 32.

Fig. 8 (c) shows an eighteenth embodiment of an emitter 32 of a device 12 for emission of thermal radiation. The emitter 32 has an octagon shape and is divided by nine separation gaps 34 into nine emitter elements 36, in particular a center emitter element 40 that has a shape like an octagon and eight peripheral emitter elements 42 that each have a shape like a trapezoid. From the general orientation, the separation gaps 34 go through the center 38 of the emitter 32 but leaving out the area of the center emitter element 38. Both arrangements of Fig. 8 (b) - (c) are considered to be spoke wheel configurations.

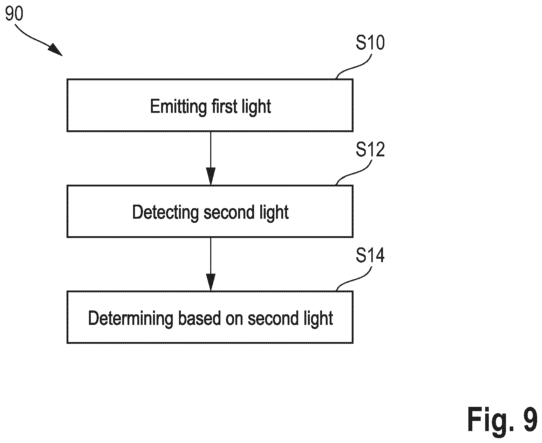

Fig. 9 shows an embodiment of a method 90 for optical gas analysis, the method comprising operating a device 12. In a first step, using a device as described before, thermal radiation is emitted S10 as first light 14 through a gas 16 to be analyzed. By passing through the gas 16, the first light 14 changes into the second light 22, i.e., the spectrum of the light changes, in particular with respect to the amplitudes at different wavelengths. This second light 22 is detected S12. Based on the detected second light 22 at least one gas concentration of at least one component of the gas 16 is determined S14.

## Claims

1. A device (12) for emission of thermal radiation, the device (12) comprising:
- a substrate (24),
- a membrane (26), wherein the substrate (24) provides a frame for the membrane (26),
- a resistive structure (28) on the membrane (26), and
- an emitter (32) of the thermal radiation arranged above the structure (28),
wherein the emitter (32) comprises at least two emitter elements (36), and
wherein the device (12) is adapted to emit broad spectrum thermal radiation,
**characterized in that** the emitter elements (36) comprise a central emitter element (40) surrounded by one or more peripheral emitter elements (42).

2. The device (12) as claimed in claim 1, wherein the device (12) is adapted to emit thermal radiation with a spectral width between 1 µm and 15 µm, in particular with a spectral width between 2 µm and 12 µm, in particular with a spectral width between 2 µm and 7 µm.

3. The device (12) as claimed in any of the preceding claims, wherein the emitter (32) comprises at least four, in particular at least five, in particular at least six, in particular at least seven emitter elements (36).

4. The device (12) as claimed in any of the preceding claims, wherein the emitter (32) has a circular shape.

5. The device (12) as claimed in any of the preceding claims, wherein a circular symmetric pattern of emitter elements (36) is provided.

6. The device (12) as claimed in any of claims 1 to 4, wherein the emitter (32) has a square or octagon shape.

7. The device (12) as claimed in any of the preceding claims, wherein a separation gap (34) separating two emitter elements (36) has a same shape as a periphery (50) of the emitter (32).

8. The device (12) as claimed in any of the preceding claims, wherein a ratio of an area of a central emitter element (40) over an area of a peripheral emitter element (42) is between 50% and 150%, in particular between 75% and 125%.

9. The device (12) as claimed in any of the preceding claims, wherein the emitter elements (36) are arranged in a spoke wheel configuration.

10. The device (12) as claimed in any of the preceding claims, wherein the emitter (32) is segmented both in a radial direction and in a tangential direction.

11. The device (12) as claimed in any of the preceding claims, wherein a separation gap (34) between a first emitter element (36) and a second emitter element (36) has a width between 1 µm and 100 µm, in particular between 5 µm and 75 µm, in particular between 10 µm and 60 µm, in particular between 15 µm and 50 µm.

12. The device (12) as claimed in any of the preceding claims, wherein a size of the emitter (32) is at least 70%, in particular at least 80%, in particular at least 85%, in particular at least 90% of a size of the membrane (36).

13. A system (10) for optical gas analysis, the system (10) comprising:
- a device (12) as claimed in any of the preceding claims, the device (12) adapted to emit a first light (14) through a gas (16) to be analyzed;
- at least one light sensor (18); and
- an analyzer (20), wherein the analyzer (20) is adapted to determine at least one gas concentration of at least one component of the gas (16) based on a second light (22) detected by the at least one light sensor (18), wherein a passing through the gas (16) changes the first light (14) into the second light (22).

14. A method (90) for optical gas analysis, the method comprising the steps of :
- emitting (S10), using a device as claimed in any of claims 1 to 12, thermal radiation as first light through a gas (16) to be analyzed;
- detecting (S12) second light, wherein a passing through the gas (16) changes the first light (14) into the second light (22); and
- determining (S14) at least one gas concentration of at least one component of the gas (16) based on the detected second light (22).

## Amended claims

### Amended claims in accordance with Rule 137(2) EPC.

**1.** A device (12) for emission of thermal radiation, the device (12) comprising:
- a substrate (24),
- a membrane (26), wherein the substrate (24) provides a frame for the membrane (26),
- a resistive structure (28) on the membrane (26), and
- an emitter (32) of the thermal radiation arranged above the structure (28), wherein the emitter (32) comprises at least two emitter elements (36), wherein the device (12) is adapted to emit broad spectrum thermal radiation, **characterized in that** the emitter elements (36) comprise a center emitter element (40) surrounded by one or more peripheral emitter elements (42), and
a shape of each peripheral emitter element (42) differs from a shape of the center emitter element (40).

**2.** The device (12) as claimed in claim 1, wherein the device (12) is adapted to emit thermal radiation with a spectral width between 1 µm and 15 µm, in particular with a spectral width between 2 µm and 12 µm, in particular with a spectral width between 2 µm and 7 µm.

**3.** The device (12) as claimed in any of the preceding claims, wherein the emitter (32) comprises at least four, in particular at least five, in particular at least six, in particular at least seven emitter elements (36).

**4.** The device (12) as claimed in any of the preceding claims, wherein the emitter (32) has a circular shape.

**5.** The device (12) as claimed in any of the preceding claims, wherein a circular symmetric pattern of emitter elements (36) is provided.

**6.** The device (12) as claimed in any of claims 1 to 4, wherein the emitter (32) has a square or octagon shape.

**7.** The device (12) as claimed in any of the preceding claims, wherein a separation gap (34) separating two emitter elements (36) has a same shape as a periphery (50) of the emitter (32).

**8.** The device (12) as claimed in any of the preceding claims, wherein a ratio of an area of a central emitter element (40) over an area of a peripheral emitter element (42) is between 50% and 150%, in particular between 75% and 125%.

**9.** The device (12) as claimed in any of the preceding claims, wherein the emitter elements (36) are arranged in a spoke wheel configuration.

**10.** The device (12) as claimed in any of the preceding claims, wherein the emitter (32) is segmented both in a radial direction and in a tangential direction.

**11.** The device (12) as claimed in any of the preceding claims, wherein a separation gap (34) between a first emitter element (36) and a second emitter element (36) has a width between 1 µm and 100 µm, in particular between 5 µm and 75 µm, in particular between 10 µm and 60 µm, in particular between 15 µm and 50 µm.

**12.** The device (12) as claimed in any of the preceding claims, wherein a size of the emitter (32) is at least 70%, in particular at least 80%, in particular at least 85%, in particular at least 90% of a size of the membrane (36).

**13.** A system (10) for optical gas analysis, the system (10) comprising:
- a device (12) as claimed in any of the preceding claims, the device (12) adapted to emit a first light (14) through a gas (16) to be analyzed;
- at least one light sensor (18); and
- an analyzer (20), wherein the analyzer (20) is adapted to determine at least one gas concentration of at least one component of the gas (16) based on a second light (22) detected by the at least one light sensor (18), wherein a passing through the gas (16) changes the first light (14) into the second light (22).

**14.** A method (90) for optical gas analysis, the method comprising the steps of :
- emitting (S10), using a device as claimed in any of claims 1 to 12, thermal radiation as first light through a gas (16) to be analyzed;
- detecting (S12) second light, wherein a passing through the gas (16) changes the first light (14) into the second light (22); and
- determining (S14) at least one gas concentration of at least one component of the gas (16) based on the detected second light (22).

**1.** A device (12) for emission of thermal radiation, the device (12) comprising:
- a substrate (24),
- a membrane (26), wherein the substrate (24) provides a frame for the membrane (26),
- a resistive structure (28) on the membrane (26), and
- an emitter (32) of the thermal radiation arranged above the structure (28), wherein the emitter (32) comprises at least two emitter elements (36), wherein the device (12) is adapted to emit broad spectrum thermal radiation, **characterized in that** the emitter elements (36) comprise a center emitter element (40) surrounded by one or more peripheral emitter elements (42),
a shape of each peripheral emitter element (42) differs from a shape of the center emitter element (40), and
the size of the center emitter element (40) is at least 3% of the total size of the emitter (32).

**2.** The device (12) as claimed in claim 1, wherein the device (12) is adapted to emit thermal radiation with a spectral width between 1 µm and 15 µm, in particular with a spectral width between 2 µm and 12 µm, in particular with a spectral width between 2 µm and 7 µm.

**3.** The device (12) as claimed in any of the preceding claims, wherein the emitter (32) comprises at least four, in particular at least five, in particular at least six, in particular at least seven emitter elements (36).

**4.** The device (12) as claimed in any of the preceding claims, wherein the emitter (32) has a circular shape.

**5.** The device (12) as claimed in any of the preceding claims, wherein a circular symmetric pattern of emitter elements (36) is provided.

**6.** The device (12) as claimed in any of claims 1 to 4, wherein the emitter (32) has a square or octagon shape.

**7.** The device (12) as claimed in any of the preceding claims, wherein a separation gap (34) separating two emitter elements (36) has a same shape as a periphery (50) of the emitter (32).

**8.** The device (12) as claimed in any of the preceding claims, wherein a ratio of an area of a central emitter element (40) over an area of a peripheral emitter element (42) is between 50% and 150%, in particular between 75% and 125%.

**9.** The device (12) as claimed in any of the preceding claims, wherein the emitter elements (36) are arranged in a spoke wheel configuration.

**10.** The device (12) as claimed in any of the preceding claims, wherein the emitter (32) is segmented both in a radial direction and in a tangential direction.

**11.** The device (12) as claimed in any of the preceding claims, wherein a separation gap (34) between a first emitter element (36) and a second emitter element (36) has a width between 1 µm and 100 µm, in particular between 5 µm and 75 µm, in particular between 10 µm and 60 µm, in particular between 15 µm and 50 µm.

**12.** The device (12) as claimed in any of the preceding claims, wherein a size of the emitter (32) is at least 70%, in particular at least 80%, in particular at least 85%, in particular at least 90% of a size of the membrane (36).

**13.** A system (10) for optical gas analysis, the system (10) comprising:
- a device (12) as claimed in any of the preceding claims, the device (12) adapted to emit a first light (14) through a gas (16) to be analyzed;
- at least one light sensor (18); and
- an analyzer (20), wherein the analyzer (20) is adapted to determine at least one gas concentration of at least one component of the gas (16) based on a second light (22) detected by the at least one light sensor (18), wherein a passing through the gas (16) changes the first light (14) into the second light (22).

**14.** A method (90) for optical gas analysis, the method comprising the steps of :
- emitting (S10), using a device as claimed in any of claims 1 to 12, thermal radiation as first light through a gas (16) to be analyzed;
- detecting (S12) second light, wherein a passing through the gas (16) changes the first light (14) into the second light (22); and
- determining (S14) at least one gas concentration of at least one component of the gas (16) based on the detected second light (22).
